# EUROPEAN PATENT SPECIFICATION

(11) **EP 0 310 354 B1**
(45) Date of publication and mention of the grant of the patent: **04.08.1993**
(21) Application number: 88308985.6
(22) Date of filing: 28.09.1988
(51) Int. Cl.: C04B 28/26, C04B 28/24, B32B 13/02, C09K 21/00

(54) **Composite materials comprising a reinforcing material and a silicate matrix**
Verstärkendes Material und eine silikatische Matrix enthaltende Verbundmaterialien
Matériaux composites contenant une matière renforçante et une matrice à base de silicate

(30) Priority: 29.09.1987 GB 8722832
(43) Date of publication of application: 05.04.1989
(73) Proprietor: Powell, Ronald, Chester CH4 9DE (GB)
(72) Inventor: Powell, Ronald, Chester CH4 9DE (GB)
(74) Representative: Taylor, Phillip Kenneth

(56) References cited:
- GB-A- 2 089 778
- GB-A- 2 167 073

## Description

The present invention relates to composite materials comprising a reinforcing material and a silicate matrix.

More particularly the invention provides for a composite material which is able to withstand relatively high impacts, is waterproof, fireproof, will not give off toxic smoke or gas in the event of a fire and is also a non-conductor of electricity.

In this modern age, more and more specialized materials are required for use in specialized fields, and the development of such materials is often hindered by the undesirable secondary characteristics of the logical choice of materials. Thus, the search for products which will conform precisely to the required specification is arduous.

At present it is often necessary to make compromises when choosing a material for a given job since the exact requirements are presently unobtainable. For example, when insulating wires the most important function for the insulating material to have is that it will not conduct electricity. However, it should preferably also be fire resistant since an electrical fault could present a major fire hazard; if the wires are to be housed out-of-doors, it is essential too that the material is at least water repellent, and if the housing is to be subjected to any external forces, it should be strong enough to resist any loads or stress that will occur. Consequently, at present it is necessary to use a different material to meet each requirement.

Thus, whilst there is a growing need for versatile materials, developing materials with the required characteristics is difficult. One problem to date has been to achieve a product with the multiplicity of desired characteristics already outlined. Much work has been carried out in the development of fire resistant materials since the discovery that asbestos dust is a major health hazard. One of the problems arising in the search to provide a substitute material for asbestos has been to find a material which can be made into boards and mouldings, which as well as being fireproof, are rigid and can withstand impact.

The substitute materials tested have invariably been inorganic in nature since they are required to possess the fire resistant properties of asbestos which in essence derive from the inorganic nature of the material. Whilst a number of substitutes have been produced, such as boards comprised principally of mica, vemiculite and alkali silicates, the resulting boards have lacked the desired multiplicity of characteristics and although they have some of the desired properties, they do not meet all the criteria required. For this reason, research has turned to the production of fireproof coatings for treating known materials.

Known organic and synthetic coatings are however disadvantageous and will, for example, disintegrate into flakes or, where they retain a continuous surface, are easily stripped from the substrate surface, making it impossible to cut or saw panels carrying such coatings without stripping the coatings. Whilst the present applicant has developed a coating composition capable of overcoming many of these difficulties, (see UK Patent No. 2167073), no composite structures which can overcome the limitations discussed are known.

The most suitable composite materials developed to date which can provide some sort of fire resistance as well as resistance to impact, are structures such as, for example, press boards and laminates which have been coated. For example, monolux board, a composite press board, has a resin matrix of calcium silicate and cellulose fibre, has some fireproof properties, is impact resistant and can be produced as rigid board. It can not, however, be moulded.

Another material which is very popular due to its ability to undergo moulding, is glassfibre in moulded or board form. This is, however, flammable, and must subsequently be coated. For maximum strength boards are made with epoxy and phenolic resins; however preparation of these boards requires the use of organic solvents and so their production can be hazardous. They are also flammable should the fireproof coating be destroyed and on burning let off toxic fumes. Furthermore, they require curing on coating and this in turn requires the use of large amounts of energy and expensive apparatus.

It is an object of the present invention to provide a structure which overcomes the above limitations.

It is another object of the present invention to provide a composite having the properties already outlined which can be cheaply and safely prepared.

The invention is predicated upon the surprising discovery that if a pre-gelled mixture of a soluble alkali silicate or an alkyl silicate such as ethyl silicate and a hardening agent such as, for example, aluminium triphosphate, are intimately mixed and allowed to impregnate a reinforcing material, the resulting composite has a hitherto unobtainable impact resistance as well as fire resistant, water resistant and non-conductive properties yet can be manipulated into various shapes before it hardens.

Thus it presents opportunity for development in various fields ranging from balistics, car body parts, and building boards to use as insulating boards in soundproofing materials, heat-resistant and water resistant materials. Its characteristics may be improved further by the incoporation of other materials into the composite, for example, the addition of phenolic resins followed by curing, can improve salt resistance. The addition of extenders such as barytes can improve soundproofing and the incorporation of mica can aid in the production of light weight materials.

According to the present invention there is provided a composite material comprising a reinforcing material and a silicate matrix which provides rigidity, characterised in that the silicate matrix is formed from a water soluble alkali silicate or alkyl silicate in admixture with a hardener therefor and in that the water-soluble alkali silicate or alkyl silicate and the hardener therefor are intimately mixed and allowed to gel before formation of the composite material.

In one embodiment, the composite material is produced as a laminate by laying alternate layers of the reinforcing material and the pre-gelled composition.

In another embodiment, a composite is made by impregnating the reinforcing material with a soluble, alkali silicate e.g. sodium silicate or an alkyl silicate, e.g. ethyl silicate.

In a preferred embodiment, the reinforcing material is cotech, a knitted, not crimped, glass fibre. This material is able to confer a previously unexpected rigidity to such a composite.

In another embodiment the reinforcing material could, for example, be glassfibre, carbon cloth, a metal webbing or any other suitable material be it organic, inorganic, synthetic or natural.

The composite may also include a minor amount of a synthetic resin latex or emulsified silicon, inorganic pigments (such as, for example, titanium dioxide or powdered slate) and/or other inert filler materials (such as, for example, talc) provided that they are neutral or alkaline materials. By inert, is meant a material which does not chemically react with any of the other ingredients of the composite.

The synthetic resin latex preferably comprises any of the synthetic polymers and copolymers which can be formed into a latex. The choice of polymer or copolymer is dependant on the end use of the product. Where flameproof or retarding properties are required the polymer is preferably one which itself has such properties, such as, for example, polymers of vinyl chloride or vinylidine chloride and copolymers thereof with another unsaturated monomer such as, for example, acrylic monomers, although other monomers not having flame retarding properties such as, for example, acrylic polymers, may be used in conjunction with a flame retarding agent.

If the synthetic resin latex is added it is dispersed as binder throughout a matrix formed by the soluble alkali silicate hardener combination. The amount of synthetic resin latex should not be such (e.g. a major amount) that the hardened composite is in effect a dispersion of the soluble alkali silicate hardener throughot a matrix formed of the synthetic resin since this would give rise to some of the very problems the composite of the invention sets out to prevent. In general the amount of synthetic resin as represented by the solid contents of the latex is small compared to the silicate hardener combination, thus a weight ratio of synthetic resin to silicate hardener of about 1:8 has been found to be satisfactory. Larger amounts of synthetic resin may be used however if desired.

The preferred hardener is aluminium triphosphate which is a kind of solid acid having the formula:- 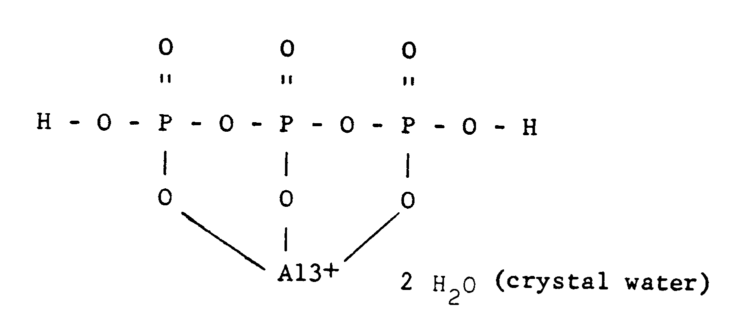
This material has been found to have no oral toxicity and no skin irritation. Aluminium triphosphate reacts with soluble sodium silicate as follows:

Na₂O.xSiO₂ + H₂AlP₃O₁₀ → Na₂AlP₃O₁₀ + H₂O.xSiO₂

The time necessary to initially form a gel after addition of the hardener to the soluble alkali silicate decreases as the amount of hardener used is increased. When aluminium triphosphate is used as the hardener, amounts of from about 3 parts by weight to about 8 parts by weight of triphosphate per 100 parts by weight of soluble alkali silicate will give initial gelling times of from 12 to 1 hours. The higher the content of hardener the shorter the useful working life of the composition will become. The amount of hardener included should therefore be chosen to provide a convenient initial gelling time consistent with the circumstances under which the composition is to be used.

Any of the commercially available aqueous dispersions of finely divided synthetic resin, especially those formulated for paint manufacture, may be used as the synthetic resin latex. Such products will already contain dispersing agents and other conventional additives normally included. Additional additives may be incorporated in the composition of the invention to provide special properties, if desired. Thus it has been found advantageous to include a wetting agent when adding the hardener to the soluble alkali silicate. Furthermore, slip promoting and surface protection agents such as micronised polypropylene wax (particle size 1-10 microns 1 x 10⁻⁶ m - 10 x 10⁻⁶ m with average particle size of 3-4 microns, 3 x 10⁻⁶ m - 4 x 10⁻⁶ m) may advantageously be added to the composition of the invention. About 3.5 parts by weight of micronised polypropylene wax per 100 parts of soluble alkali silicate have been found advantageous, although greater or lesser amounts may be incorporated if desired. Thus, amounts of from about 0.1% by weight to about 0.5% by weight based on the total weight of composition provide slip promoting effects although an amount up to 5% by weight can be used if special matting surface effects are desired on the laminate or moulding.

The soluble alkali silicate is used in the form normally available, which are aqueous solutions. Thus, aqueous sodium silicate of specific gravity 1.398 is typical of the commerically available material (sometimes referred to as water glass). The weight or volume amounts of soluble alkali silicate stated herein refer to the aqueous materials which are commercially available.

Before addition to the soluble alkali silicate the aluminium triphosphate is preferably vigorously mixed with water and wetting agent and the mixture allowed to stand for several hours. The water/triphosphate mixture is then slowly added to the soluble alkali silicate with stirring and the mixture allowed to gel. The formation of the gel may take 1 to 12 hours depending on the amount of aluminium triphosphate included.

The synthetic resin latex is preferably adjusted to neutral to alkaline pH before being mixed with the pre-gelled soluble alkali silicate. The adjustment may be made by adding an aqueous alkali preferably ammonia. It has also been found advantageous to add a surface active agent such as ethoxylated nonylphenol to the latex with the aqueous alkali.

The pigment, filler and other inert additives are preferably added and mixed with the latex before the latex is mixed with the pre-gelled alkali silicate. Preferably the pigment and other additives are vigorously premixed with water, including a wetting agent, before being mixed with the pH adjusted latex.

Finally, the pre-gelled soluble alkali silicate should be slowly stirred and the pH adjusted latex containing the other additives slowly added with continued stirring. The final composition should be allowed to stand for a short period, e.g about an hour, before use.

The preferred structural rigidity confers Cotech, a knitted glass fibre.

The invention will be further illustrated by way of the following Examples:

### Example 1

### Preparation of a basic laminate board in accordance with the present invention.

1. 50 ml of water, 10ml of Polywet (Polywet is a Trade Mark) and 10 gm of aluminium triphosphate were mixed in a high speed mixer and allowed to stand for 12 hours. The mixture was then slowly added to 200 ml of aqueous sodium silicate of specific gravity 1.398 with mild agitation. After 1 hour the mixture had formed into a gel.
2. 6 gm of Cotech, a multi-axial reinforced glassfibre knitwear was prepared.
3. The Cotech prepared in (2) above was then laid on a flat surface and the mixture from (1) poured over it. Another layer of Cotech was then laid over the layer thus formed and the mixture left. The composition was allowed to harden for 48 hours at ambient temperature. The resultant laminate board was capable of withstanding a 6 kg force exerted by a block of mild steel with a hemispherical end having a radius of 25 mm when dropped from a height of 1 m. It was also waterproof, a non-conductor of electricity, and capable of withstanding temperatures of 1,000°C.

### Example 2.

1. 50 ml of water, 10 ml of Polywet (Polywet is a Trade Mark) and 12 g of aluminium triphosphate were mixed in a high speed mixer and allowed to stand for 10 hours. The mixture was then slowly added to 250 ml of aqueous sodium silicate of specific gravity 1.398 with mild agitation as by slow stirring. After 1 hour the mixture had formed into a gel.
2. 50 ml of water, 80 g of talc and 10 ml of Polywet were mixed together in a high speed mixer for 10 minutes.
3. About 50 ml of a latex resin, 10 ml of NP30, a proprietary detergent composed essentially of ethoxylated nonylphenol and 4 ml of ammonia 35% NH37 were mixed together to form a mixture having a pH of 10:12.
4. Mixture produced in (2) above was then slowly mixed with the pH adjusted latex (3).
5. The gel formed in (1) above was slowly stirred and the mixture formed in (4) slowly added with continued stirring. After standing for 1 hour the composition was ready for use.

### Example 3

1. 50 ml of water, 10 ml of Polywet (Polywet is a Trade Mark) and 12 g of aluminium triphosphate were mixed in a high speed mixer and allowed to stand for 10 hours. The mixture was then slowly added to 250 ml of ethyl silicate with mild agitation as by slow stirring. After 1 hour the mixture had formed into a gel.
2. 50 ml of water, 80 g of talc and 10 ml of Polywet were mixed together in a high speed mixer for 10 minutes.
3. About 50 ml of emulsified silicon, 10 ml of NP30, a proprietary detergent composed essentially of ethoxylated nonylphenol and 4 ml of ammonia 35% NH37 were mixed together to form a mixture having a pH of 10:12.
4. Mixture produced in (2) above was then slowly mixed with the pH adjusted silicon (3).
5. The gel formed in (1) above was slowly stirred and the mixture formed in (4) slowly added with continued stirring. After standing for 1 hour the composition was ready for use.

The composition (5) prepared in Examples 2 and 3 was then used to produce various products.
a. A reinforcing material in the form of carbon cloth was cut to shape and then impregnated with the composition described above (5). It was left at ambient temperature for 48 hours to cure.

Alternatively, heating can be used if shorter time periods are required. Thus temperatures of 200°C for 30 minutes, or lower temperatures used for longer time periods, can be used.
b. Alternate layers of Cotech and the composition described above (3) were layered on each other to form a laminate. The laminate was then pressed and allowed to cure for 48 hours at ambient room temperature.
c. A composition described in (5) was mixed with a glassfibre pulp and underwent vacuum forming or injection moulding by known techniques.

Another embodiment of the present invention comprises a laminate of the present invention with at least one layer of a ceramic fibre, for example blow or spun alumina silicate fibre.

It has been found that curing of the composite material continues even in the dry state even up to the point of substantially 100% cure. As a result, a board formed by the present invention will become even harder several days after the initial production.

Cotech, as referred to hereinabove, is the trade name for a biaxial and/or multiaxial knitted fabric.

## Claims

1. A composite material characterised by comprising a reinforcing material impregnated with a silicate matrix which provides rigidity and which is formed from a pregelled intimate mixture of a water soluble alkali silicate or alkyl silicate with a hardener therefor.

2. A composite material as claimed in claim 1, characterised in that said composite further comprises a minor amount of synthetic resin latex or emulsified silicon.

3. A composite material as claimed in claim 2, wherein the ratio of the weight of synthetic resin latex to the combined weight of soluble alkali silicate in said hardening agent is 1:8.

4. A composite material as claimed in claim 3, wherein said material capable of conferring rigidity is one from carbon cloth, glass fibre, metal webbing, or ceramic fibre.

5. A composite material as claimed in claim 3, wherein the synthetic resin latex comprises a fireproof or fire-retardant material.

6. A composite material as claimed in claim 5, wherein said synthetic resin latex comprises a vinyl chloride, or a vinylidene chloride polymer or copolymer.

7. A composite material as claimed in any of the preceding claims, characterised in that said hardening agent is aluminium triphosphate.

8. A composite material as claimed in claim 7, wherein the aluminium triphosphate is present in amounts of 3 parts by weight to 8 parts by weight per 100 parts by weight of the soluble alkali silicate or alkyl silicate.

9. A composite material as claimed in any of the preceding claims, wherein the soluble alkali silicate comprises aqueous sodium silicate solution.

10. A composite material as claimed in claims 1 to 8, wherein the alkyl silicate is ethyl silicate.

11. A composite material as claimed in any of the preceding claims, which further comprises one or more of an inorganic pigment, an inert filler material, a dispersing agent, a wetting agent, a slip promoting and surface protecting agent, an extender, a phenolic or epoxy resin, and/or mica.

12. A composite material as claimed in claim 11, wherein said inorganic pigment is titanium oxide or powdered slate, said inert filler material is talc, said slip promoting and surface protecting agent is micronised polypropylene and wax, and said extender is barytes.

13. A composite material as claimed in any of the preceding claims in the form of a board.

14. A composite as claimed in any of claims 1 to 12 in the form of a moulded or shaped product.

15. A composite as claimed in any of the preceding claims in the form of a laminate formed from alternating layers of a reinforcing material and a pre-gelled mixture of a water-soluble alkali silicate or alkyl silicate and a hardening agent therefor.

16. A method of producing a composite material characterized by the steps of:
- vigorously mixing together aluminium triphosphate, water and a wetting agent;
- allowing the mixture to stand;
- adding the mixture slowly to an aqueous solution of a soluble alkali silicate or alkyl silicate;
- allowing the so formed mixture to gel;
- impregnating a reinforcing material with the gel; and
- curing the gel.

## Patentansprüche

1. Verbundmaterial, dadurch gekennzeichnet, daß es ein mit einer silicatischen Matrix imprägniertes Verstärkungsmaterial aufweist, das Steifigkeit bewirkt und das aus einer vorgelierten innigen Mischung aus einem wasserlöslichen Alkalisilicat oder Alkylsilicat mit einem Härter dafür gebildet ist.

2. Verbundmaterial nach Anspruch 1, dadurch gekennzeichnet, daß der genannte Verbund ferner eine geringe Menge an Syntheseharzlatex oder emulgiertem Silicon aufweist.

3. Verbundmaterial nach Anspruch 2, worin das Gewichtsverhältnis von Syntheseharzlatex zum kombinierten Gewicht von löslichem Alkalisilicat im genannten Härter 1 : 8 beträgt.

4. Verbundmaterial nach Anspruch 3, worin das genannte zur Vermittlung von Steifigkeit geeignete Material aus Kohlenstoffmatte, Glasfaser, Metallgewebe oder Keramikfaser gewählt ist.

5. Verbundmaterial nach Anspruch 3, worin der Syntheseharzlatex ein feuerfestes oder feuerhemmendes Material aufweist.

6. Verbundmaterial nach Anspruch 5, worin der Syntheseharzlatex ein Vinylchlorid- oder ein Vinylidenchloridpolymer oder -copolymer aufweist.

7. Verbundmaterial nach einem der vorhergehenden Ansprüche, dadurch gekennzeichnet, daß der genannte Härter Aluminiumtriphosphat ist.

8. Verbundmaterial nach Anspruch 7, worin das Aluminiumtriphosphat in Mengen von 3 Gewichtsteilen bis 8 Gewichtsteilen auf 100 Gewichsteile des löslichen Alkalisilicats oder Alkylsilicats vorhanden ist.

9. Verbundmaterial nach einem der vorhergehenden Ansprüche, worin das lösliche Alkalisilicat wässrige Natriumsilicatlösung aufweist.

10. Verbundmaterial nach den Ansprüchen 1 bis 8, worin das Alkylsilicat Ethylsilicat ist.

11. Verbundmaterial nach einem der vorhergehenden Ansprüche, das ferner ein oder mehrere anorganische Pigmente, ein inertes Füllermaterial, ein Dispergiermittel, ein Netzmittel, ein das Gleiten verbesserndes und die Oberfläche schützendes Mittel, ein Streckmittel, ein Phenol- oder Epoxidharz und/oder Glimmer aufweist.

12. Verbundmaterial nach Anspruch 11, worin das genannte anorganische Pigment Titanoxid oder pulverisierter Schiefer ist, das genannte Füllermaterial Talkum ist, das genannte das Gleiten verbessernde und die Oberfläche schützende Mittel feinverteiltes Polypropylen und Wachs ist und das genannte Streckungsmittel Baryte sind.

13. Verbundmaterial nach einem der vorhergehenden Ansprüche in Form einer Platte.

14. Verbundmaterial nach einem der Ansprüche 1 bis 12 in Form eines gegossenen oder geformten Produktes.

15. Verbundmaterial nach einem der vorhergehenden Ansprüche in Form eines Laminates gebildet aus abwechselnden Schichten eines Verstärkungsmaterials und einer vorgelierten Mischung aus einem wasserlöslichen Alkalisilicat oder Alkylsilicat und einem Härter dafür.

16. Verfahren zur Herstellung eines Verbundmaterials, gekennzeichnet durch die Schritte:
- kräftiges Zusammenmischen von Aluminiumtriphosphat, Wasser und einem Benetzungsmittel;
- Stehenlassen der Mischung;
- langsames Zugeben der Mischung zu einer wässrigen Lösung eines löslichen Alkalisilicats oder Alkylsilicats;
- Gelieren lassen der so gebildeten Mischung;
- Imprägnieren eines Verstärkungsmaterials mit dem Gel; und
- Härten des Gels.

## Revendications

1. Matériau composite caractérisé par le fait qu'il comprend un matériau de renforcement imprégné d'une matrice de silicate qui confère de la rigidité et qui est formée d'un mélange intime prégélifié d'un silicate d'alkyle ou silicate alcalin hydrosoluble avec un durcisseur pour celui-ci.

2. Matériau composite tel que revendiqué dans la revendication 1, caractérisé par le fait que ledit matériau composite contient de plus une petite quantité de latex de résine synthétique ou de silicone émulsionnée.

3. Matériau composite tel que revendiqué dans la revendication 2, dans lequel le rapport du poids du latex de résine synthétique au poids total du silicate alcalin soluble et dudit agent durcisseur est de 1:8.

4. Matériau composite tel que revendiqué dans la revendication 3, dans lequel ledit matériau capable de conférer de la rigidité est choisi entre une étoffe de carbone, la fibre de verre, une toile métallique ou une fibre céramique.

5. Matériau composite tel que revendiqué dans la revendication 3, dans lequel le latex de résine synthétique comprend une matière ignifuge ou retardatrice de combustion.

6. Matériau composite tel que revendiqué dans la revendication 5, dans lequel ledit latex de résine synthétique comprend un polymère ou copolymère de chlorure de vinyle ou de chlorure de vinylidène.

7. Matériau composite tel que revendiqué dans l'une quelconque des revendications précédentes, caractérisé par le fait que l'agent durcisseur est le triphosphate d'aluminium.

8. Matériau composite tel que revendiqué dans la revendication 7, dans lequel le triphosphate d'aluminium est présent en des quantités de 3 parties en poids à 8 parties en poids pour 100 parties en poids du silicate d'alkyle ou silicate alcalin soluble.

9. Matériau composite tel que revendiqué dans l'une quelconque des revendications précédentes, dans lequel le silicate alcalin soluble comprend une solution aqueuse de silicate de sodium.

10. Matériau composite tel que revendiqué dans l'une quelconque des revendications 1 à 8, dans lequel le silicate d'alkyle est le silicate d'éthyle.

11. Matériau composite tel que revendiqué dans l'une quelconque des revendications précédentes, qui comprend de plus l'un ou plusieurs de : un pigment minéral, une charge inerte, un agent dispersant, un agent mouillant, un agent facilitant le glissement et protecteur de surface, un diluant, une résine phénolique ou époxy et/ou mica.

12. Matériau composite tel que revendiqué dans la revendication 11, dans lequel ledit pigment minéral est l'oxyde de titane ou la poudre d'ardoise, ladite charge inerte est le talc, ledit agent facilitant le glissement et protecteur de surface est une cire de polypropylène micronisée, et ledit diluant est la barytine.

13. Matériau composite tel que revendiqué dans l'une quelconque des revendications précédentes, sous la forme d'un panneau.

14. Matériau composite tel que revendiqué dans l'une quelconque des revendications 1 à 12, sous la forme d'un produit moulé ou faconné.

15. Matériau composite tel que revendiqué dans l'une quelconque des revendications précédentes, sous la forme d'un stratifié formé à partir de couches alternées d'un matériau de renforcement et d'un mélange prégélifié d'un silicate d'alkyle ou silicate alcalin hydrosoluble et d'un agent durcisseur pour celui-ci.

16. Procédé de production d'un matériau composite, caractérisé par les étapes suivantes :
mélanger énergiquement ensemble du triphosphate d'aluminium, de l'eau et un agent mouillant ;
laisser reposer le mélange ;
ajouter lentement le mélange à une solution aqueuse d'un silicate d'alkyle ou silicate alcalin soluble ;
laisser gélifier le mélange ainsi formé ;
imprégner un matériau de renforcement avec le gel ; et
durcir le gel.
